# EUROPEAN PATENT APPLICATION

(11) **EP 4 741 525 A1**
(43) Date of publication of application: **13.05.2026**
(21) Application number: 25791539.7
(22) Date of filing: 19.05.2025
(51) Int. Cl.: C22C 38/44, C22C 38/50, C22C 38/02, C22C 38/04, C22C 38/06, C22C 33/06, C21D 8/02

(54) **MEDIUM-CHROMIUM HEAT-RESISTANT FERRITIC STAINLESS STEEL, AND PREPARATION METHOD FOR MEDIUM-CHROMIUM HEAT-RESISTANT FERRITIC STAINLESS STEEL COLD PLATE AND USE THEREOF**

(30) Priority: 19.09.2024 CN 202411307216
(71) Applicant: Shanxi Taigang Stainless Steel Co., Ltd., Shanxi 030003 (CN)
(72) Inventor: DUAN, Xiufeng, Taiyuan, Shanxi 030003 (CN); LIU, Chunlai, Taiyuan, Shanxi 030003 (CN); FU, Jinzhu, Taiyuan, Shanxi 030003 (CN); WEI, Hairui, Taiyuan, Shanxi 030003 (CN); WU, Min, Taiyuan, Shanxi 030003 (CN); ZHANG, Litao, Taiyuan, Shanxi 030003 (CN)
(74) Representative: Köllner, Malte
(86) International application number: PCT/CN2025/095624
(87) International publication number: WO 2026/060977

(57) **Abstract**

The present invention discloses a medium-chromium heat-resistant ferritic stainless steel and a cold-rolled sheet preparation method and use thereof. The chemical composition of the medium-chromium heat-resistant ferritic stainless steel is: C≤0.020%, N≤0.020%, Si: 0.30%-0.50%, Mn: 0.20%-0.50%, Cr: 17.0%-19.0%, Al: 2.0%-4.0%, Ni: 0.05%-0.30%, Mo: 0.10%-0.30%, Ti: 0.10%-0.30%, with the balance being Fe and unavoidable impurity elements, and 60≤(*w*_{Al}+*w*_{Si})×*w*_{Cr}≤70, 1.0≤4*w*_{Ni}+8*w*_{Mo}-*w*_{Mn}≤2.0. The preparation method for the medium-chromium heat-resistant ferritic stainless steel cold-rolled sheet comprises steps of smelting, continuous casting, hot rolling, and cold rolling. The medium-chromium heat-resistant ferritic stainless steel cold-rolled sheet of the present invention combines excellent high-temperature oxidation resistance and electrical resistance properties with good processing performance and corrosion resistance, effectively expanding the application fields of medium-chromium heat-resistant ferritic stainless steel products.

## Description

### TECHNICAL FIELD

The present invention belongs to the field of stainless steel production technology, specifically relates to a medium-chromium heat-resistant ferritic stainless steel with combined properties of oxidation resistance, high resistivity, high workability and high corrosion resistance, as well as its cold-rolled sheet, preparation method and use of the cold-rolled sheet.

### BACKGROUND

Cr content in medium-chromium ferritic stainless steel ranges between16~19%. This type of stainless steel has gained widespread application due to its excellent corrosion resistance, workability and cost-effectiveness. The most prototypical medium-chromium ferritic stainless steel is 430 stainless steel. By further reducing C and N element content and adding stabilizing elements such as Nb and Ti , ultra-pure ferritic stainless steels like 439 and 441 have been developed. To further enhance corrosion resistance, elements like Mo or Cu have been added, resulting in varieties such as 436, 444, and SUS430J1L.

For heat-resistant ferritic stainless steel, the surface layer needs to form oxide films of Cr₂ O₃, Al₂O₃, or SiO₂, in which the oxide film of Al₂O₃ is the most dense. Increasing Al and Si content, on one hand, raises the material's resistivity, but on the other hand, reduces its workability. Additionally, Al element can also weaken the material's corrosion resistance.

Therefore, there is a need to design a new composition system and preparation process for medium-chromium heat-resistant ferritic stainless steel that can form a dense Al₂O₃ oxide film on the surface to improve high-temperature oxidation resistance while ensuring the material's resistivity and workability, along with maintaining certain corrosion resistance properties.

### SUMMARY

To address the above technical issues, the present invention provides a medium-chromium heat-resistant ferritic stainless steel and its cold-rolled sheet, as well as preparation method and use of the cold-rolled sheet.

The chemical composition of the medium-chromium heat-resistant ferritic stainless steel provided by the present invention is, by mass percentage, as follows: C≤0.020%, N≤0.020%, Si: 0.30%-0.50%, Mn: 0.20%-0.50%, Cr: 17.0%-19.0%, Al: 2.0%-4.0%, Ni: 0.05%-0.30%, Mo: 0.10%-0.30%, Ti: 0.10%-0.30%, with the balance being Fe and unavoidable impurity elements, contents of Al, Si and Cr elements satisfying 60≤(*w*_{Al}+*w*_{Si})×*w*_{Cr}≤70, and contents of Mn, Ni, and Mo elements satisfying 1.0≤4*w*_{Ni}+8*w*_{Mo-}*w*_{Mn}≤2.0, where *w*_{Al}, *w*_{Si}, *w*_{Cr}, *w*_{Mn}, *w*_{Ni} and *w*_{Mo} represent mass percentage contents of the elements Al, Si, Cr, Mn, Ni and Mo, respectively.

Preferably, the contents of C and N in the medium-chromium heat-resistant ferritic stainless steel are controlled to be C≤0.012% and N≤0.012%.

Further, a total oxygen content in the medium-chromium heat-resistant ferritic stainless steel is T[O]≤10ppm.

A preparation method for a medium-chromium heat-resistant ferritic stainless steel cold-rolled sheet provided by the present invention comprises the following steps:
(1) smelting: using molten iron as a raw material, smelting is performed through processes of molten iron pretreatment, K-OBM-S, VOD, and LF to achieve decarburization, reduction, and alloying, wherein a chemical composition of the molten steel obtained is controlled by mass percentage as follows: C≤0.020%, N≤0.020%, Si: 0.30%-0.50%, Mn: 0.20%-0.50%, Cr: 17.0%-19.0%, Al: 2.0%-4.0%, Ni: 0.05%-0.30%, Mo: 0.10%-0.30%, Ti: 0.10%-0.30%, with the balance being Fe and unavoidable impurity elements, contents of Al, Si and Cr elements satisfying 60≤(*w*_{Al}+*w*_{Si})×*w*_{Cr}≤70, and contents of Mn, Ni and Mo elements satisfying 1.0≤4*w*_{Ni}+8*w*_{Mo}-*w*_{Mn}≤2.0, where *w*_{Al}, *w*_{Si}, *w*_{Cr}, *w*_{Mn}, *w*_{Ni} and *w*_{Mo} represent mass percentage contents of the elements Al, Si, Cr, Mn, Ni and Mo, respectively;
(2) continuous casting: slab continuous casting is performed via a tundish, with electromagnetic stirring applied throughout the continuous casting, and an isometric crystal ratio of a casting blank is controlled to be >55%;
(3) hot rolling: a heating temperature is controlled at 1150-1200°C, with 7 hot rolling passes, a final rolling temperature is controlled at ≤880°C, followed by layer cooling after hot rolling, and a coiling temperature is controlled at ≤500°C; and
(4) cold rolling: first, hot coil annealing and pickling are performed, with a hot coil annealing temperature controlled at 940-1000°C, and a hot coil annealing time controlled at 1.4-1.8 min/mm; then multi-pass cold rolling is performed, with a total deformation rate controlled at 55%-85%, a cold coil annealing furnace temperature controlled at 880-940°C, and a cold coil annealing time controlled at 1.0-1.4 min/mm; and finally, a cold-rolled sheet surface is polished to produce the medium-chromium heat-resistant ferritic stainless steel cold-rolled sheet.

Further, Cr alloying is performed in K-OBM-S, aluminum pellets are used for reduction in VOD followed by alloying of Al, Si, Mn, and Ti, and Ni and Mo alloying is performed in a LF furnace.

Further, in the step of hot rolling, the final rolling temperature is controlled to ≤850°C, and the coiling temperature is controlled to ≤400°C.

Further, in the step of cold rolling, the hot coil annealing temperature is controlled to 940-980°C, the total deformation rate of cold rolling is controlled to 60%-85%, the cold coil annealing furnace temperature is controlled to 880-920°C, and the surface of the cold-rolled sheet is polished with a 230# sandpaper.

A medium-chromium heat-resistant ferritic stainless steel cold-rolled sheet provided in the present invention is prepared by the preparation method for a medium-chromium heat-resistant ferritic stainless steel cold-rolled sheet. The medium-chromium heat-resistant ferritic stainless steel cold-rolled sheet has a width of 1000-1300 mm and a thickness of 0.4-2.0 mm, and a surface type of the medium-chromium heat-resistant ferritic stainless steel cold-rolled sheet is a HL surface, with a roughness of < 0.40µm , and a total oxygen content of T[0] ≤ 10 ppm.

Further, the medium-chromium heat-resistant ferritic stainless steel cold-rolled sheet has a grain size of grade 7-8, a percentage elongation after fracture of 30%-33%, a plastic strain ratio r of 1.20-1.40, and a room-temperature resistivity of 1.15-1.20□ µΩ · cm; after continuous high-temperature oxidation in atmospheric conditions at 900 ° C for 200 h, the oxidation weight gain rate is 0.10-0.15mg/cm²; in a salt spray test conducted in 35 ° C , 5% of NaCl spray, no rust spots are observed within 48 h.

Additionally, the present invention further provides use of the medium-chromium heat-resistant ferritic stainless steel cold-rolled sheet as described above in household appliances, industrial combustion furnaces, automotive exhaust systems, and electric heating equipment of new energy vehicles, wherein the medium-chromium heat-resistant ferritic stainless steel cold-rolled sheet is used to manufacture high-temperature resistant components or electric heating elements in household appliances, industrial combustion furnaces, automotive exhaust systems, and new energy vehicles.

The present invention focuses on the design of the composition system and optimization of the cold-rolled sheet preparation process for medium-chromium heat-resistant ferritic stainless steel, providing a medium-chromium heat-resistant ferritic stainless steel, a medium-chromium heat-resistant ferritic stainless steel cold-rolled sheet, a preparation method, and use thereof. While ensuring the material's excellent high-temperature oxidation resistance and electrical resistivity, it also exhibits good processing performance and certain corrosion resistance, effectively expanding the application fields of medium-chromium heat-resistant ferritic stainless steel products. Compared to existing technologies, the technical solution of the present invention offers the following advantages and beneficial effects:
(1) through reasonable matching of main elements Cr, Al , Si and microalloying with Mn , Ni , Mo , Ti elements, the medium-chromium heat-resistant ferritic stainless steel and its products obtained by the present invention can achieve good processing performance and improved corrosion resistance while ensuring the formation of a dense Al₂O₃ oxide film;
(2) the medium-chromium heat-resistant ferritic stainless steel cold-rolled sheet of the present invention has a grain size of grade 7-8, a percentage elongation after fracture of 30%-33%, and a plastic strain ratio r value of 1.20-1.40; its room-temperature resistivity is 1.15-1.20 µΩ · cm; after undergoing 900 ° C/200h high-temperature oxidation resistance testing, the oxidation weight gain rate is 0.10-0.15mg/cm² , with no oxide film peeling observed; after surface grinding, salt spray tests conducted in 35 ° C and 5% NaCl spray show no rust spots within 48 h. The medium-chromium heat-resistant ferritic stainless steel and its cold-rolled sheet exhibit excellent high-temperature oxidation resistance and electrical resistivity, along with good processing performance and certain corrosion resistance.

### BRIEF DESCRIPTION OF DRAWINGS

To more clearly illustrate the technical solutions in the embodiments of the present invention or the prior art, the accompanying drawings required for describing the embodiments or the prior art will be briefly introduced below. Obviously, the drawings in the following description are merely some embodiments of the present invention. For those of ordinary skill in the art, other drawings can be obtained from these illustrations without creative effort. In the drawings:
FIG. 1 shows the metallographic structure of a medium-chromium heat-resistant ferritic stainless steel cold-rolled sheet prepared according to Embodiment 1 of the present invention;
FIG. 2 shows the cross-sectional composition mapping of the oxide layer of a medium-chromium heat-resistant ferritic stainless steel cold-rolled sheet prepared according to Embodiment 2 of the present invention.

### DESCRIPTION OF EMBODIMENTS

To make the objectives, technical solutions, and advantages of the present invention clearer, the technical solutions of the present invention will be described clearly and comprehensively below in conjunction with specific embodiments and corresponding accompanying drawings. Obviously, the described embodiments are only a part of the embodiments of the present invention, rather than all of them. Based on the embodiments of the present invention, all other embodiments obtained by those of ordinary skill in the art without creative effort shall fall within the protection scope of the present invention.

The present invention aims to provide a medium-chromium heat-resistant ferritic stainless steel and a cold-rolled sheet preparation method thereof, which not only ensures excellent high-temperature oxidation resistance and electrical resistance properties but also achieves good processing performance and certain corrosion resistance. To this end, the present invention has designed the composition system and optimized the cold-rolled sheet preparation process for medium-chromium heat-resistant ferritic stainless steel.

In the first aspect of the present invention, a medium-chromium heat-resistant ferritic stainless steel is provided. The chemical composition of the medium-chromium heat-resistant ferritic stainless steel, by mass percentage, is: C≤0.020%, N≤0.020%, Si: 0.30%-0.50%, Mn: 0.20%-0.50%, Cr: 17.0%-19.0%, Al: 2.0%-4.0%, Ni: 0.05%-0.30%, Mo: 0.10%-0.30%, Ti: 0.10%-0.30%, with the balance being Fe and unavoidable impurity elements, contents of Al, Si and Cr elements satisfying 60≤(*w*_{Al}+*w*_{Si})×*w*_{Cr}≤70, and contents of Mn, Ni, and Mo elements satisfying 1.0≤4*w*_{Ni}+8*w*_{Mo}-*w*_{Mn}≤2.0, where *w*_{Al}, *w*_{Si}, *w*_{Cr}, *w*_{Mn}, *w*_{Ni} and *w*_{Mo} represent mass percentage contents of the elements Al, Si, Cr, Mn, Ni and Mo, respectively.

Furthermore, the total oxygen content in the aforementioned medium-chromium heat-resistant ferritic stainless steel is controlled to T[0] ≤ 10ppm .

In the present invention, the composition system design for medium-chromium heat-resistant ferritic stainless steel primarily includes: promoting the formation of a dense Al₂O₃ oxide film through the composite addition of Cr, Al , and Si elements; significantly enhancing the oxide film's spallation resistance by adding trace amounts of Ti element; improving the material's corrosion resistance by adding Ni and Mo elements and controlling Mn element; and increasing the material's resistivity while ensuring its cold workability by regulating the contents of Al and Si elements. The resulting medium-chromium heat-resistant ferritic stainless steel exhibits not only excellent high-temperature oxidation resistance and electrical resistivity but also superior corrosion resistance and workability, thereby broadening its application scope. The roles and content requirements of the elements in the medium-chromium heat-resistant ferritic stainless steel of the present invention are described as follows:
C and N: Carbon and nitrogen have extremely low solubility and high diffusion rates in ferritic stainless steel, leading to the precipitation of chromium carbides and nitrides during cooling after high-temperature heating, which are the root causes of high-temperature brittleness and sensitization in ferritic stainless steel. Additionally, chromium carbides tend to form CO bubbles at high temperatures, which escape from beneath the oxide film, compromising the denseness of the oxide film. Therefore, the contents of C and N elements must be strictly controlled. In the present invention, the contents of C and N are both limited to ≤ 0.020% , preferably ≤0.012%.
Si: Silicon is a high-temperature oxidation-resistant element that forms SiO₂ during the high-temperature oxidation of stainless steel, distributed at the interface between the oxide film and the metal matrix, thereby inhibiting oxygen penetration and reducing the alloy's oxidation rate. Silicon also moderately increases the material's resistivity. However, excessive silicon not only adversely affects the oxidation resistance of stainless steel but also reduces the alloy's plasticity and worsens cold workability. Thus, the Si content in the present invention is controlled at 0.30%-0.50%.
Mn: Manganese is an unavoidable element in the raw materials for stainless steel smelting. As a solid-solution strengthening element, it enhances the toughness of ferritic stainless steel. However, excessive manganese can degrade the steel's corrosion resistance. Therefore, the Mn content in the present invention is controlled at 0.20%-0.50%.
Cr: Chromium is the most important alloying element in stainless steel and a strong ferrite-forming element, serving as one of the primary alloying elements for oxidation resistance and corrosion resistance in stainless steel. Simultaneously, chromium, as a third element, strongly promotes the formation of the Al₂O₃ oxide film, reducing the content of Al element in the corresponding metal matrix within the single Al₂O₃ oxide film. For medium-chromium ferritic stainless steel, the present invention controls the Cr content at 17.0% - 19.0%.
Al: Aluminum is a key element for improving the oxidation resistance of heat-resistant stainless steel because the Al₂O₃ oxide film is denser and more stable compared to Cr₂O₃ and SiO₂. Additionally, aluminum is an excellent deoxidizer, achieving ideal deoxidation effects and providing a prerequisite for obtaining a high yield of stabilized Ti elements. Aluminum can significantly increase the resistivity of the material. However, aluminum can cause severe embrittlement in ferritic stainless steel, drastically reducing material toughness. Therefore, the present invention controls the Al content at 2.0-4.0%.
Ni : In ferritic stainless steel, nickel can increase the strength of the steel, reduce its room-temperature toughness, and enhance its corrosion resistance in reducing media, including uniform corrosion, pitting, and crevice corrosion. Therefore, the present invention controls the Ni content at 0.05%-0.30%.
Mo: The addition of molybdenum imparts superior corrosion resistance to ferritic stainless steel, improving its passivation capability and the stability of the passive film, particularly enhancing resistance to CI- corrosion. Additionally, molybdenum contributes to solid solution strengthening, increasing the high-temperature strength and creep strength of stainless steel. Therefore, the present invention controls the Mo content at 0.10%-0.30%.
Ti: Titanium has a strong affinity for carbon and nitrogen, preferentially forming titanium carbides and titanium nitrides in steel, thereby avoiding the precipitation of chromium carbides and chromium nitrides. Furthermore, as an active element, Ti enhances the compactness and spalling resistance of the oxide film. Therefore, the present invention controls the Ti content at 0.10%-0.30%.

In the second aspect of the present invention, a preparation method for a medium-chromium heat-resistant ferritic stainless steel cold-rolled sheet is provided. The process route consists of smelting → continuous casting → hot rolling → cold rolling. An optimized process involving slab continuous casting, low-temperature hot rolling, low-temperature annealing, and multi-pass large-deformation cold rolling is adopted to prepare the medium-chromium heat-resistant ferritic stainless steel cold-rolled sheet. The method specifically includes the following steps:
(1) Smelting: Using molten iron as the raw material, smelting is performed through processes such as molten iron pretreatment, K-OBM-S, VOD, and LF to achieve decarburization, reduction, and alloying. The chemical composition of the molten steel obtained by smelting is controlled by mass percentage as follows: C≤0.020%, N≤0.020%, Si: 0.30%-0.50%, Mn: 0.20%-0.50%, Cr: 17.0%-19.0%, Al: 2.0%-4.0%, Ni: 0.05%-0.30%, Mo: 0.10%-0.30%, Ti: 0.10%-0.30%, with the balance being Fe and unavoidable impurity elements. Additionally, the contents of Al, Si and Cr elements satisfy 60≤(*w*_{Al}+*w*_{Si})×*w*_{Cr}≤70, and the contents of Mn, Ni and Mo elements satisfy 1.0≤4*w*_{Ni}+8*w*_{Mo}-*w*_{Mn}≤2.0, where *w*_{Al}, *w*_{Si}, *w*_{Cr}, *w*_{Mn}, *w*_{Ni} and *w*_{Mo} represent mass percentage contents of the elements Al, Si, Cr, Mn, Ni and Mo, respectively.
(2) Continuous casting: Slab continuous casting is conducted via a tundish, which can be single casting, double casting, or triple casting. Electromagnetic stirring is applied throughout the continuous casting process to ensure the axial crystal ratio of the casting blank exceeds 55%.
(3) Hot rolling: Hot rolling requires ensuring multi-pass rolling, low-temperature rolling, and low-temperature coiling to refine the grains of the hot-rolled sheet and increase deformation energy storage. The heating temperature is controlled at 1150-1200°C, the hot rolling passes are set to 7, the final rolling temperature is controlled at ≤ 880 ° C , and layer cooling is applied after hot rolling, with the coiling temperature controlled at ≤ 500 ° C.
(4) Cold rolling: The cold rolling process must ensure good workability of the material, requiring low-temperature slow annealing and multi-pass high-deformation cold rolling. First, hot coil annealing and pickling are performed, with the hot coil annealing temperature controlled at 940-1000°C and the annealing time regulated at 1.4-1.8 min/mm. This is followed by multi-pass cold rolling, with the total deformation rate controlled at 55%-85%. The cold coil annealing furnace temperature is set to 880-940°C, and the annealing time is regulated at 1.0-1.4 min/mm. Finally, the surface of the cold-rolled sheet is polished to produce a medium-chromium heat-resistant ferritic stainless steel cold-rolled sheet.

Furthermore, in the preparation method for a medium-chromium heat-resistant ferritic stainless steel cold-rolled sheet, to improve production efficiency and the yield of precious elements while ensuring the purity of the molten steel, high-content Cr elements are alloyed at K-OBM-S. Aluminum pellets are used for reduction in the VOD, followed by the alloying of easily oxidized elements Al, Si, Mn, and Ti. Precious elements Ni and Mo are alloyed in the LF furnace.

Preferably, in the preparation method for a medium-chromium heat-resistant ferritic stainless steel cold-rolled sheet, during the hot rolling step, the final rolling temperature is controlled at ≤ 850 ° C , and the coiling temperature is controlled at ≤ 400 ° C .

Preferably, in the preparation method for a medium-chromium heat-resistant ferritic stainless steel cold-rolled sheet, during the cold rolling step, the hot coil annealing temperature is controlled at 940 - 980 ° C , the total cold rolling deformation rate is controlled at 60%-85%, and the cold coil annealing furnace temperature is controlled at 880-920°C . The surface of the cold-rolled sheet is polished using a 230# sand paper.

In a third aspect of the present invention, a medium-chromium heat-resistant ferritic stainless steel cold-rolled sheet is provided. This medium-chromium heat-resistant ferritic stainless steel cold-rolled sheet is prepared by the aforementioned method for preparing a medium-chromium heat-resistant ferritic stainless steel cold-rolled sheet. The cold-rolled sheet has a width of 1000-1300 mm, a thickness of 0.4-2.0 mm, an HL surface type, a roughness of < 0.40 µm, and a total oxygen content of T[0] ≤ 10ppm.

The medium-chromium heat-resistant ferritic stainless steel of the present invention, prepared through smelting, continuous casting, hot rolling, and cold rolling, has a grain size of 7-8 grade, a percentage elongation after fracture of 30%-33%, a plastic strain ratio r value of 1.20-1.40, and a room-temperature resistivity of 1.15-1.20 µΩ·cm; after continuous high-temperature oxidation at 900°C for 200 h in an atmospheric environment, the oxidation weight gain rate is 0.10-0.15mg/cm² , with no oxidation film peeling observed; after surface grinding and salt spray testing with 5% NaCl spray at 35 ° C , no rust spots are observed within 48 h.

In a fourth aspect of the present invention, use of the medium-chromium heat-resistant ferritic stainless steel cold-rolled sheet is provided for household appliances, industrial combustion furnaces, automotive exhaust systems, and electric heating equipment in new energy vehicles. The cold-rolled sheet is used to manufacture high-temperature resistant components or electric heating elements for manufacturing household appliances, industrial combustion furnaces, automotive exhaust systems and new energy vehicles.

The following describes in detail the medium-chromium heat-resistant ferritic stainless steel and a cold-rolled sheet preparation method thereof in the present invention with reference to the embodiments of the present invention and comparative examples from prior art.

The chemical compositions of the medium-chromium heat-resistant ferritic stainless steel cold-rolled sheets prepared in Embodiments 1-3 of the present invention and those prepared in Comparative Examples 1-3 of prior art are shown in Table 1 below (the balance is Fe and unavoidable impurity elements):

**Table 1 Composition (wt.%) of the ferritic stainless steel cold-rolled sheets in Embodiments 1-3 and Comparative Examples 1-3**

| Item | Embodiment | | | Comparative Example | | |
|---|---|---|---|---|---|---|
| | 1 | 2 | 3 | 1 | 2 | 3 |
| C | 0.010 | 0.012 | 0.008 | 0.024 | 0.011 | 0.083 |
| N | 0.003 | 0.002 | 0.004 | 0.002 | 0.008 | 0.007 |
| Si | 0.37 | 0.32 | 0.34 | 0.16 | 0.18 | 0.88 |
| Mn | 0.23 | 0.24 | 0.22 | 0.13 | 0.05 | 0.75 |
| Cr | 18.06 | 17.98 | 18.15 | 17.20 | 17.45 | 17.84 |
| Al | 3.25 | 3.28 | 3.16 | 4.36 | 0.06 | 0.89 |
| Ni | 0.08 | 0.13 | 0.10 | 0.09 | 0.09 | 0.08 |
| Mo | 0.18 | 0.13 | 0.15 | 0.01 | 0.98 | 0.00 |
| Ti | 0.14 | 0.18 | 0.16 | 0.12 | 0.17 | 0.01 |
| (*w*_{Al}+*w*_{Si})×*w*_{Cr} | 65.38 | 64.73 | 63.53 | 77.74 | 4.19 | 31.58 |
| 4*w*_{Ni}+8*w*_{Mo}-*w*_{Mn} | 1.53 | 1.32 | 1.38 | 0.31 | 8.15 | -0.43 |

In Embodiments 1-3 of the present invention, the contents of alloying element Al , Si, Cr, Mn, Ni and Mo satisfy 60≤(*w*_{Al}+*w*_{Si})×*w*_{Cr}≤70 and 1.0≤4*w*_{Ni}+8*w*_{Mo}-*w*_{Mn}≤2.0 ; in Comparative Example 1, (*w*_{Al}+*w*_{Si})×*w*_{Cr}>70, 4*w*_{Ni}+8*w*_{Mo}-*w*_{Mn}<1.0; in Comparative Example 2, (*w*_{Al}+*w*_{Si})×*w*_{Cr}<10, 4*w*_{Ni}+8*w*_{Mo}-*w*_{Mn}>2.0; in Comparative Example 3, (*w*_{Al}+*w*_{Si})×*w*_{Cr}<40, 4*w*_{Ni}+8*w*_{Mo}-*w*_{Mn} < 1.0.

The main process parameters for preparing medium-chromium heat-resistant ferritic stainless steel cold-rolled sheets in Embodiments 1-3 of the present invention are shown in Table 2 below:

**Table 2 Main Process Parameters of Embodiments 1-3**

| Embodiment | Hot rolling | | | | | |
|---|---|---|---|---|---|---|
| | Heating temperature °C | Final rolling temperature °C | Coiling temperature °C | Thickness mm | | |
| 1 | 1160-1180 | 840 | 340 | 3.5 | | |
| 2 | 1150-1170 | 830 | 350 | 2.8 | | |
| 3 | 1170-1190 | 850 | 380 | 4.2 | | |

| Embodiment | Hot coil annealing | | Cold rolling | | Cold coil annealing | |
|---|---|---|---|---|---|---|
| | Temperature °C | Time min/mm | Total deformation rate % | Thickness mm | Temperature °C | Time min/mm |
| 1 | 960 | 1.5 | 71 | 1.0 | 900 | 1.2 |
| 2 | 980 | 1.4 | 82 | 0.5 | 920 | 1.0 |
| 3 | 950 | 1.7 | 62 | 1.6 | 890 | 1.3 |

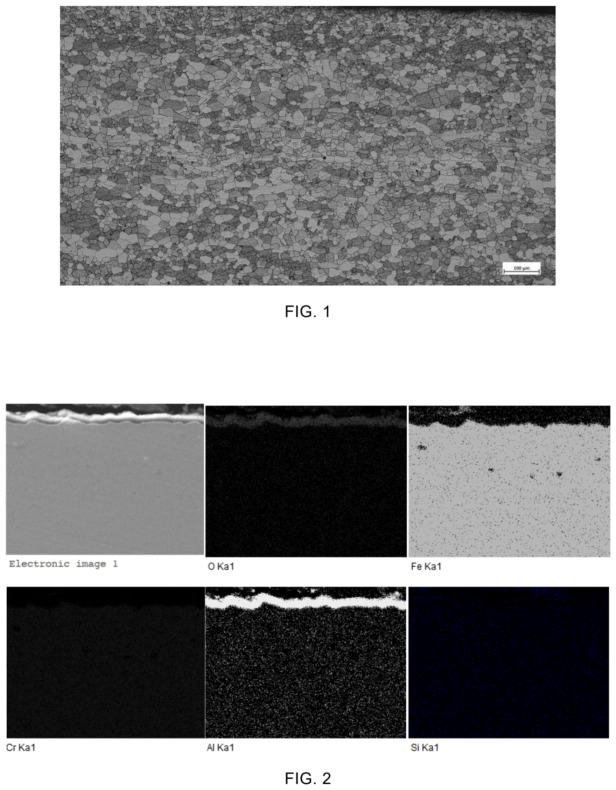

Analysis and performance testing were conducted on the medium-chromium heat-resistant ferritic stainless steel cold-rolled sheets prepared using Embodiments 1-3 of the present invention and the Comparative examples 1-3 prepared using the prior art. The metallographic structure image of the medium-chromium heat-resistant ferritic stainless steel cold-rolled sheet prepared in Embodiment 1 of the present invention is shown in FIG. 1, and the cross-sectional composition mapping of the oxide layer for the medium-chromium heat-resistant ferritic stainless steel cold-rolled sheet prepared in Embodiment 2 is shown in FIG. 2. The performance test results are summarized in Table 3 below. The measurement standards and methods for the performance parameters are as follows: grain size was determined according to GBT 6394 "Methods for Determining the Average Grain Size of Metals"; mechanical tensile testing was performed according to GBT 228.1 "Metallic Materials-Tensile Testing-Part 1: Method of Test at Room Temperature"; plastic strain ratio was measured according to GB/T 5027 "Metallic Materials-Sheet and Strip-Determination of Plastic Strain Ratio (r-value)"; room-temperature resistivity was tested according to GB/T 6146 "Test Methods for Resistivity of Precision Resistance Alloys"; high-temperature oxidation experiments were conducted according to GB/T13303 "Test Methods for Oxidation Resistance of Steel"; salt spray corrosion testing was performed according to GB/T 10125 "Corrosion Tests in Artificial Atmospheres-Salt Spray Tests." Additionally, for each performance parameter test, three samples were taken from each example and comparative example, with the average of the three samples being the final result. Furthermore, after mechanical grinding and polishing perpendicular to the sample thickness direction, the metallographic structure of the material was observed using an optical microscope, and the cross-section of the oxide layer was examined using a scanning electron microscope to determine the composition and structure of the oxide layer.

**Table 3 Summary of performance for the heat-resistant ferritic stainless steel cold-rolled sheets in Embodiments 1-3 and Comparative Examples 1-3**

| Item | | Grain size | Elongation after fracture % | Plastic strain ratio r-value | Room temperature resistivity, µΩ · cm | High-temperature oxidation weight gain at 900°C/200h, mg/cm² | 35°C/5% NaCl salt spray |
|---|---|---|---|---|---|---|---|
| Embodiment | 1 | 7.5 | 30.0 | 1.26 | 1.20 | 0.11 | No rust spots within 48h |
| | 2 | 8.0 | 32.5 | 1.35 | 1.19 | 0.12 | No rust spots within 48h |
| | 3 | 7.0 | 31.5 | 1.27 | 1.18 | 0.11 | No rust spots within 48h |
| Comparative Example | 1 | 6.5 | 24.5 | 1.13 | 1.22 | 0.13 | Numerous rust spots within 48h |
| | 2 | 7.0 | 31.0 | 1.38 | 0.67 | 1.28 | No rust spots within 72h |
| | 3 | 6.0 | 25.0 | 1.02 | 0.88 | 0.95 | Numerous rust spots within 48h |

From the actual testing and experimental results, it can be observed that in terms of grain size of the ferritic stainless steel cold-rolled sheet, Embodiments 1-3 achieved grade 7-8, comparable to Comparative Example 2 and superior to Comparative Examples 1 and 3. Regarding percentage elongation after fracture, Embodiments 1-3 reached 30%-33%, similar to Comparative Example 2 but better than Comparative Examples 1 and 3. For the plastic strain ratio r , Embodiments 1-3 scored 1.20-1.40, slightly lower than Comparative Example 2 but better than Comparative Examples 1 and 3. In room-temperature resistivity, Embodiments 1-3 measured 1.15-1.20*µ*Ω · cm, marginally lower than Comparative Example 1 but significantly superior to Comparative Examples 2 and 3. For high-temperature oxidation resistance weight gain, Embodiments 1-3 recorded 0.10-0.15mg/cm², comparable to Comparative Example 1 but far exceeding Comparative Examples 2 and 3, with a uniform and dense Al₂O₃ film formed on the surface of the cold-rolled sheets. In salt spray corrosion resistance, Embodiments 1-3 showed no rust spots within 48 h , inferior to Comparative Example 2 but markedly better than Comparative Examples 1 and 3. These comparative test results demonstrate that the medium-chromium heat-resistant ferritic stainless steel and its cold-rolled sheet of the present invention exhibit outstanding high-temperature oxidation resistance and electrical properties, along with excellent processing performance and certain corrosion resistance.

In summary, the present invention has designed the composition system and optimized the cold-rolled sheet preparation process for medium-chromium heat-resistant ferritic stainless steel, providing a medium-chromium heat-resistant ferritic stainless steel, a medium-chromium heat-resistant ferritic stainless steel cold-rolled sheet, a preparation method and use thereof. While ensuring superior high-temperature oxidation resistance and electrical properties, the material also achieves excellent processing performance and certain corrosion resistance, effectively expanding the application scope of medium-chromium heat-resistant ferritic stainless steel products. Compared to existing technologies, the technical solution of the present invention offers the following advantages and beneficial effects:
(1) Through rational matching of main elements Cr, Al, Si and microalloying with Mn, Ni, Mo, Ti , the medium-chromium heat-resistant ferritic stainless steel and its products obtained by the present invention can ensure the formation of a dense Al₂O₃ oxide film while also achieving excellent processing performance and good corrosion resistance;
(2) The medium-chromium heat-resistant ferritic stainless steel cold-rolled sheet of the present invention has a grain size of grade 7-8, a percentage elongation after fracture of 30%-33% , and a plastic strain ratio r value of 1.20-1.40; the room-temperature resistivity is 1.15-1.20*µ*Ω · cm; after 900 ° C/200h high-temperature oxidation resistance testing, the oxidation weight gain rate is 0.10-0.15mg/cm², with no oxidation film peeling observed; after surface grinding, salt spray tests were conducted in 35 ° C and 5% NaCl sprays, with no rust spots observed within 48 h . The medium-chromium heat-resistant ferritic stainless steel and its cold-rolled sheet exhibit excellent high-temperature oxidation resistance and electrical resistivity, along with good processing performance and certain corrosion resistance.

It should be noted that, apart from what is explicitly described herein, the process methods of the present invention can be implemented using conventional methods or devices in the field. Unless otherwise specified, the terms used herein have the meanings commonly understood by those skilled in the art. Moreover, when a numerical range is disclosed herein, the range is considered continuous and includes both the minimum and maximum values of the range, as well as every value between them. Furthermore, when the range refers to integers, it includes every integer between the minimum and maximum values. Additionally, when multiple ranges describe a feature, these ranges may be combined. In other words, unless otherwise indicated, all ranges disclosed herein should be understood to include any and all subranges within them.

It should also be noted that, in this context, the term "comprising" or any other variation thereof is intended to cover non-exclusive inclusion, so that an item or device comprising a series of elements includes not only those elements but also other elements not explicitly listed, or elements inherent to such an item or device.

Furthermore, it should be noted that the above embodiments are only used to illustrate the technical solutions of the present invention and are not intended to limit it. Although the present invention has been described in detail with reference to the foregoing embodiments, those skilled in the art should understand that they can still modify the technical solutions described in the various embodiments or equivalently replace some of the technical features. Such modifications or replacements do not depart from the essence of the corresponding technical solutions as defined by the scope of the present invention.

## Claims

1. A medium-chromium heat-resistant ferritic stainless steel, wherein the medium-chromium heat-resistant ferritic stainless steel comprises following chemical compositions by mass percentage: C≤0.020%, N≤0.020%, Si: 0.30%-0.50%, Mn: 0.20%-0.50%, Cr: 17.0%-19.0%, Al: 2.0%-4.0%, Ni: 0.05%-0.30%, Mo: 0.10%-0.30%, Ti: 0.10%-0.30%, with the balance being Fe and unavoidable impurity elements, contents of Al, Si and Cr elements satisfying 60≤(*w*_{Al}+*w*_{Si})×*w*_{Cr}≤70, and contents of Mn, Ni, and Mo elements satisfying 1.0≤4*w*_{Ni}+8*w*_{Mo}-*w*_{Mn}≤2.0, where *w*_{Al}, *w*_{Si}, *w*_{Cr}, *w*_{Mn}, *w*_{Ni} and *w*_{Mo} represent mass percentage contents of the elements Al, Si, Cr, Mn, Ni and Mo respectively.

2. The medium-chromium heat-resistant ferritic stainless steel according to claim 1, wherein the contents of C and N in the medium-chromium heat-resistant ferritic stainless steel are controlled to be C≤0.012% and N≤0.012%.

3. The medium-chromium heat-resistant ferritic stainless steel according to claim 1, wherein total oxygen content in the medium-chromium heat-resistant ferritic stainless steel is T[O]≤10ppm.

4. A preparation method for a medium-chromium heat-resistant ferritic stainless steel cold-rolled sheet, comprising the following steps:
(1) smelting: using molten iron as a raw material, smelting is performed through processes of molten iron pretreatment, K-OBM-S, VOD and LF to achieve decarburization, reduction, and alloying, wherein chemical composition of the molten steel obtained is controlled by mass percentage as follows: C≤0.020%, N≤0.020%, Si: 0.30%-0.50%, Mn: 0.20%-0.50%, Cr: 17.0%-19.0%, Al: 2.0%-4.0%, Ni: 0.05%-0.30%, Mo: 0.10%-0.30%, Ti: 0.10%-0.30%, with the balance being Fe and unavoidable impurity elements, contents of Al, Si and Cr elements satisfying 60≤(*w*_{Al}+*w*_{Si})×*w*_{Cr}≤70, and contents of Mn, Ni and Mo elements satisfying 1.0≤4*w*_{Ni}+8*w*_{Mo}-*w*_{Mn}≤2.0, where *w*_{Al}, *w*_{Si}, *w*_{Cr}, *w*_{Mn}, *w*_{Ni} and *w*_{Mo} represent mass percentage contents of the elements Al, Si, Cr, Mn, Ni and Mo respectively;
(2) continuous casting: slab continuous casting is performed via a tundish, with electromagnetic stirring applied throughout the continuous casting, and an isometric crystal ratio of a casting blank is controlled to be >55%;
(3) hot rolling: a heating temperature is controlled at 1150-1200°C, with 7 hot rolling passes, a final rolling temperature is controlled at ≤880°C, followed by layer cooling after hot rolling, and a coiling temperature is controlled at ≤500°C; and
(4) cold rolling: first, hot coil annealing and pickling are performed, with a hot coil annealing temperature controlled at 940-1000°C, and a hot coil annealing time controlled at 1.4-1.8 min/mm; then multi-passes cold rolling is performed, with a total deformation rate of cold rolling controlled at 55%-85%, a cold coil annealing furnace temperature controlled at 880-940°C, and a cold coil annealing time controlled at 1.0-1.4 min/mm; and finally, a cold-rolled sheet surface is polished to produce the medium-chromium heat-resistant ferritic stainless steel cold-rolled sheet.

5. The preparation method for a medium-chromium heat-resistant ferritic stainless steel cold-rolled sheet according to claim 4, wherein Cr alloying is performed in K-OBM-S, aluminum pellets are used for reduction in VOD followed by alloying of Al, Si, Mn, and Ti, and Ni and Mo alloying is performed in a LF furnace.

6. The preparation method for a medium-chromium heat-resistant ferritic stainless steel cold-rolled sheet according to claim 4, wherein in the step of hot rolling, the final rolling temperature is controlled to ≤850°C, and the coiling temperature is controlled to ≤400°C.

7. The preparation method for a medium-chromium heat-resistant ferritic stainless steel cold-rolled sheet according to claim 4, wherein in the step of cold rolling, the hot coil annealing temperature is controlled to 940-980°C, the total deformation rate of cold rolling is controlled to 60%-85%, the cold coil annealing furnace temperature is controlled to 880-920°C, and the surface of the cold-rolled sheet is polished with a 230# sandpaper.

8. A medium-chromium heat-resistant ferritic stainless steel cold-rolled sheet prepared by the preparation method for a medium-chromium heat-resistant ferritic stainless steel cold-rolled sheet according to any one of claims 4 to 7, wherein the medium-chromium heat-resistant ferritic stainless steel cold-rolled sheet has a width of 1000-1300 mm and a thickness of 0.4-2.0 mm, and a surface type of the medium-chromium heat-resistant ferritic stainless steel cold-rolled sheet is a HL surface, with a roughness of < 0.40µm , and a total oxygen content of T[0] ≤ 10ppm.

9. The medium-chromium heat-resistant ferritic stainless steel cold-rolled sheet according to claim 8, wherein the medium-chromium heat-resistant ferritic stainless steel cold-rolled sheet has a grain size of grade 7-8, a percentage elongation after fracture of 30%-33%, a plastic strain ratio r of 1.20-1.40, and a room-temperature resistivity of 1.15-1.20µΩ · cm; after continuous high-temperature oxidation in atmospheric conditions at 900 ° C for 200 h, the oxidation weight gain rate is 0.10-0.15mg/cm²; in a salt spray test conducted in 35 ° C , 5% of NaCl spray, no rust spots are observed within 48h.

10. Use of the medium-chromium heat-resistant ferritic stainless steel cold-rolled sheet according to claim 8 or 9 in household appliances, industrial combustion furnaces, automotive exhaust systems, and electric heating equipment of new energy vehicles, wherein the medium-chromium heat-resistant ferritic stainless steel cold-rolled sheet is used to manufacture high-temperature resistant components or electric heating elements in household appliances, industrial combustion furnaces, automotive exhaust systems, and new energy vehicles.
